# EUROPEAN PATENT APPLICATION

(11) **EP 1 847 183 A2**
(43) Date of publication of application: **24.10.2007**
(21) Application number: 07015375.4
(22) Date of filing: 28.01.2005
(51) Int. Cl.: A23L 1/32, A23L 1/0522

(54) **Frozen heat and serve egg patty**

(30) Priority: 30.01.2004 US 540406 P
(62) Divisional of application: 05712616.1
(71) Applicant: CARGILL, INCORPORATED, Minneapolis Minnesota 55440 (US)
(72) Inventor: The designation of the inventor has not yet been filed
(74) Representative: HOFFMANN EITLE

(57) **Abstract**

The present invention relates to egg patties that can be cooked, frozen and then reheated to provide an egg patty that resembles fresh eggs. The egg patty includes liquid whole egg, an edible oil, an amount of freeze-thaw stabilizer effective for providing freeze-thaw stability, and a pH controller.

## Description

The present invention relates to egg patties that can be cooked, frozen and then reheated to provide an egg patty that resembles an egg patty made from fresh eggs. More particularly, the egg patty includes liquid whole egg, an edible oil, freeze-thaw stabilizer, flavoring, phosphates and a pH controller each in amounts effective for providing an egg patty which is capable of being folded and which has a texture, color, flavor and appearance similar to fresh eggs.

### BACKGROUND

Egg products for use in food articles are made on a commercial scale by depositing a liquid egg mixture into a mold or belt and cooking the liquid egg mixture. Egg patties produced by these types of processes tend to have a commercial processing appearance and do not have acceptable organoleptic properties, are not appetizing, and do not have desirable homemade or handmade appearances.

Previous commercial egg patties tended to be dense and lacked the fluffy texture of fresh scrambled eggs. Additionally, previous commercial egg patties differed in color than the bright yellow appearance of fresh eggs. Also, previous commercial egg patties lacked the flavor and aroma of fresh scrambled eggs. Therefore, a need exists to improve egg patties to have a light, tender and slightly moist texture; bright yellow appearance; and a flavor and aroma more reminiscent of fresh scrambled eggs.

Previous efforts to provide a more desirable appearing egg patty have resulted in the addition of dairy products to the egg. The addition of dairy products may create health risks for individuals having dairy allergies that consume the egg patties without knowing about a dairy product in them. Additions of dairy products may also result in a browning of the egg patty over time. Therefore, a need exists to develop an egg product with an improved appearance that does not include dairy products.

Some known commercially available egg patties contained only about 50% of eggs. The public has a right and an interest in knowing the contents of food it consumes. Therefore, a need exists for an egg patty containing a higher percentage of eggs, to comport with an individual's expectation of the food contents.

Additionally, egg patties containing only about 50% of eggs may lack nutrients naturally found in fresh eggs. A need exists for egg patties that contain a higher egg content to provide an increase in protein, Vitamin A, lutein, Vitamin D, Choline, and various other vitamins and minerals naturally found in eggs.

Some commercial retail suppliers of egg patties desire to fold scrambled eggs to provide a unique product which is readily served in a biscuit or bun. Fresh scrambled eggs do not readily tolerate a cook, freeze and reheat cycle and do not readily fold.

### SUMMARY

The present invention is directed to a cooked egg patty which is frozen to provide a cooked frozen egg patty, and is capable of being reheated to provide an egg patty that resembles an egg patty made from fresh eggs. The composition of the egg patty prior to cooking and its method of preparation are effective for providing a product that after freezing, thawing and reheating has sensory attributes of a freshly prepared scrambled eggs. Moreover, the egg patty of the invention will readily fold as compared to an egg patty of equal size and shape made from scrambled liquid whole egg.

The egg patty product of the present invention has a texture, color, flavor and appearance similar to fresh eggs. To provide a egg patty with characteristics similar to fresh eggs, the egg patty is made from a composition which is an egg blend which includes liquid whole egg, an edible oil, an amount of freeze-thaw stabilizer effective for providing freeze-thaw stability, flavor, a gum to suspend the freeze thaw stabilizer, phosphates and an amount of pH controller effective for providing a pH of 7.2 or less, preferably a pH of 6.4 to 7.2, more preferably a pH of 6.8 to 7.1, and most preferably a pH of 7.0 to 7.1. The oil, the modified food starch, and the gum all are in amounts effective for providing an egg patty made from the egg blend with foldability which is greater than an egg patty of the same size and thickness made from liquid whole egg. A modified food starch is an especially important and unique freeze-thaw stabilizer. Liquid whole egg is present in the egg blend in an amount effective for providing desired flavor, texture and aroma. In this aspect of the invention, the egg patty blend includes at least 90 weight percent, preferably from 95 to 98.5 weight percent, and more preferably 97 to 98 weight percent liquid whole egg based on the weight of the blend before cooking.

### DETAILED DESCRIPTION

Unless defined otherwise, all technical and scientific terms used herein have the same meaning as commonly understood by one of ordinary skill in the art to which this invention belongs. All patents and publications referred to herein are incorporated by reference herein. For purposes of the present invention, the following terms are defined below.

"Liquid whole egg" means egg white and yolk in the ratio which is generally recognized as the ratio of yolk to white in shell eggs. That ratio generally is in the range of from about 1 part yolk to about 2 parts egg white. Liquid whole egg generally has about 23 to 24.5 weight percent solids and 76.5 weight percent water.

"Freeze-thaw stability" refers to an egg patty product that is capable of being frozen, thawed and then reheated such that product attributes of the resulting egg patty are similar to that of an egg patty that was prepared from fresh liquid whole egg that was not frozen and reheated. After reheating, the egg patty of the invention has a slightly mottled bright yellow color with a shiny surface. The external surface of the egg patty is slightly irregular with a porous or moon-cratered appearance. When the cooked egg patty is cut in half, the internal texture appearance is slightly striated in a vertical fashion and fold seams are barely detectable. When biting into the egg patty, the texture is light, tender and slightly moist. The product does not have a dry and crumbly feel or release an excess of free moisture. In an important aspect, the product is capable of going through at least one cycle of cooking, freezing and thawing.

"Flavor" refers to the natural whole egg flavor which is a multi-component mixture of natural and/or artificial flavoring ingredients.

As used herein, "edible material" includes any material that is generally regarded as safe by FDA and does not have to be removed from the food component before it is eaten (i.e., a material that can be safely chewed and ingested by the consumer).

As used herein, "a foldable egg patty" refers to a liquid whole egg product that is more readily foldable than liquid whole egg. To determine foldability of the egg patty according to the invention, that foldability is compared to a patty of scrambled liquid whole egg. In making the comparison, an egg blend as described herein (as well as a comparative patty of liquid whole egg) are cooked on a surface at a temperature as described. Before cooking, the size of the egg blend deposited on the surface is about 3 inches wide by about 8 1/8 inches long. After cooking the egg patty made from the blend of the invention and liquid whole egg are be folded to provide an egg patty with a length of about 2 1/4 inches to about 3 inches, preferably a length about 2.61 inches, a width of about 2.63 inches to about 2.89 inches, preferably a width of about 2.75 inches, and a height of about 0.37 to about 0.54 inches, preferably about 0.45 inches. The egg composition of the invention more readily folds than an egg patty made from just liquid whole egg.

To provide a egg patty with characteristics similar to fresh eggs, the egg patty is made from a composition which is an egg blend which includes liquid whole egg, an edible oil, an amount offreeze-thaw stabilizer effective for providing freeze-thaw stability, gum, flavor, phosphates and an amount of pH controller effective for providing a pH of 7.2 or less. The egg patty blend includes at least 90 weight percent, preferably from 95 to 98.5 weight percent, and more preferably 97 to 98 weight percent liquid whole egg based on the weight of the blend before cooking.

The freeze-thaw stabilizer blended with the liquid whole egg is effective for providing an egg patty with characteristic similar to fresh eggs after the blend is cooked, frozen, thawed and reheated. Generally this amount is from 0.5 to 3 weight percent freeze-thaw stabilizer based on the weight of the egg blend before cooking. Previously, xanthan gum was used as a freeze-thaw stabilizer. An important aspect of the present invention is using modified food starch as the freeze-thaw stabilizer which is effective for stabilizing the egg patty through at least one cooking, freezing, one thaw and reheating such that the reheated egg patty will have the characteristics of fresh scrambled or fresh eggs.

A modified food starch has better freeze/thaw stability properties than xanthan gum. Modified food starches for an egg patty may be made from tapioca, corn, or potato. A modified starch is cross-linked to form a structure which is effective to bind moisture in the egg to permit freezing and to provide a cook, freeze, thaw and reheat cycle as described above. In a very important aspect of the present invention, the modified food starch is cornstarch. Modified cornstarch has a strong crosslinked structure which can tolerate abusive processing conditions. Corns tarch will not begin to swell until it reaches a temperature of 140°F or higher. Eggs in the blend of the invention will begin to cook at temperatures approaching 160°F to 185°F.

Carrageenan gum also may be included in the egg blend. Carrageenan gum plays a dual role as a freeze/thaw stabilizer as well as a thickening agent. The gum increases the viscosity of the partially cooked egg blend which enables the cooking egg to be folded into thirds more easily when the product is slightly viscous. Carrageenan gum also aids in keeping the modified food starch of the egg patty formula suspended in solution. Typically, without the use of a thickening agent, the modified food starch will settle to the bottom of the mix in the silo or holding tank. Carrageenan gum is used in amounts effective to achieve these objectives which amounts generally are from 0.03 to 0.085 weight percent, with a preferred amount of 0.075 weight percent based upon the weight of the uncooked egg blend. Examples of other gums which may be used in combination with the other ingredients in the egg blend include carrageenan, guar, xanthan, locust bean, gum arabic, or combinations thereof.

The egg blend may include water in an amount effective for providing the desired fluffy and tender appearance of fresh eggs, The water further allows the egg to rise to a desired height by creating steam within the egg blend during the cooking process. In this aspect of the invention, the egg patty may include from 1 to 5 weight percent water, based on the weight of the egg blend before cooking.

In another aspect, the egg blend to make the egg patty includes an edible oil. The edible oil is effective for providing the egg patty with desired tenderness and organoleptic properties that resemble a patty made from fresh eggs that has not been frozen and reheated. The edible oil acts to provide the egg patty with a glossy sheen surface with a slightly irregular and dimpled texture, thereby aiding to the overall tenderness of the egg patty. Edible oils that may be used in the present invention include edible vegetable oils and may include oils selected from the group consisting of soybean oil, partially hydrogenated soybean oil, corn oil, canola oil, olive oil, sunflower oil, peanut oil, coconut oil, rapeseed oil, palm oil, palm kernel oil, co ttonseed oil, and mixtures thereof. In this aspect of the invention, the egg blend includes from 1 to 3 weight percent edible oil, based on the weight of the blend before cooking.

In an very important aspect of the invention, the edible oil is soybean oil. Soybean oil adds tenderness to the egg patty ensuring the eggs are not dry and crumbing but slightly moist and tender. The soybean oil also gives the appearance of a glossy and irregular egg patty that is similar to fresh eggs.

The egg blend to make the egg patty further includes an amount of pH controller effective for providing and maintaining the egg patty with a bright yellow color. Compositions useful for controlling pH in the present invention include pH controllers selected from the group consisting of citric acid, sodium pyrophosphate, tetrasodium pyrophosphate, disodium phosphate, trisodiumphosphate, monosodium phosphate and mixtures thereof. In this aspect of the invention, the egg blend includes from 0.05 to 0.3 weight percent pH controller, based on the weight of the egg patty blend before cooking. In a very important aspect of the invention, the pH controller is citric acid.

Additionally, the egg blend to make the egg patty may include phosphates. Phosphates are used to preserve the rich yellow whole egg color like fresh eggs. Phosphates that may be used in the present invention include tetrasodium pyrophosphate disodium phosphate, trisodiumphosphate, sodium acid pyrophosphate and monosodium phosphates. In this aspect of the invention, the egg patty includes 0.14 to 0.21 weight percent of the phosphates, based on the weight of the blend before cooking.

The egg blend to make the egg patty also includes natural whole egg flavor. The flavoring is added to maintain the whole egg flavor during storage and throughout the expected shelf life of the egg patty. Flavoring is also added to match the flavor of fresh scrambled eggs. The natural whole egg flavor is a multi-component mixture of natural and artificial flavoring ingredients. In this aspect, the egg patty includes 0.01 to 0.25 weight percent of the flavor ingredients, based on the weight of the blend before cooking. In one aspect, the whole egg flavor has all natural ingredients.

The invention provides a method of making a foldable egg patty. In this aspect, liquid whole egg, an edible oil, an amount of freeze-thaw stabilizer effective for providing freeze-thaw stability, gum, flavor, phosphates and an amount of pH controller effective for providing a pH of 7.2 or less, preferably a pH of 6.4 to 7.2, more preferably a pH of 6.8 to 7.1, and most preferably 7.0 to 7.1, are blended together. The blend then is cooked by depositing the composition onto a surface having a temperature of from 220°F to 310°F, preferably 255°F to 280°F. After deposit of the liquid whole egg composition on the surface having a temperature of from 250°F to 300°F, the egg composition is allowed to cook without application of additional external heat for 30 to 70 seconds, preferably 30 to 60 seconds, and more preferably about 55 seconds. In one aspect, during cooking the liquid egg composition may be folded into thirds.

The invention also is directed to a method of making a reheatable, cooked frozen egg patty. After cooking, the egg patty may be transferred to a freezer having a temperature of 60°F to 0°F, preferably 55°F for a dwell time of 5 to 7 minutes, preferably 6.1 minutes.

### Product Attributes

Product attributes are determined and validated through various sensory evaluations. Such evaluations include descriptive analysis, triangle difference tests and duo-trio difference tests. These evaluations occur using taste panelists trained to evaluate eggs on texture, color, appearance and flavor and identify specific attributes.

The following examples illustrate methods for carrying out the invention and should be understood to be illustrative of, but not limiting upon, the scope of the invention which is defined in the appended claims.

### EXAMPLES

### EXAMPLE 1: Preparation of Frozen Egg Patty

The following table is one example of an egg patty composition.

| Ingredients | Percent | Amount |
|---|---|---|
| Whole Egg | 97.065 | 4853.25 LB |
| Soybean Oil | 1.2 | 60 LB |
| Modified Corn Starch | 1.2 | 60 LB |
| SAPP | 0.14 | 7 LB |
| Natural Whole Egg Flavor | 0.2 | 10 LB |
| Citric Acid | 0.08 | 4 LB |
| MSP | 0.04 | 2 LB |
| Carrageenan Gum | 0.075 | 3.75 |
| Total | 100 | 5000 LB |

### Processing Parameters

### Oven Settings and Pan Sizes:

A mold for a pan is 9.064"L x 3.00"W x 0.625"D. There were 18 molds/pan and 153 pans/oven.

Oven manufacturer is Wolverine and the digital setting on this oven is 262°F.

A pan temperature at the time the egg is deposited into the pans was 255°F to 300°F.

The deposit amount is 1.70 ounces of the liquid whole egg composition.

Cooking time is 55 seconds from the time the liquid whole egg composition was poured into the pan to the time it was flipped into thirds.

### Specific Processing Information

Pans were oiled with DH-135 (Par-way/Tryson Companies). The oil was applied with an atomizer which sprayed two to three mists of oil per pan.

The pans proceeded through a dry heat conveyor oven.

At the time the pans reached the filler, the temperature of the pan was 250°F to 300°F. The filler (AutoProd) deposited 1.70 ounces of liquid whole egg composition. The filler has the capability to deposit liquid whole egg composition into 18 molds/pan.

After deposit, the pans proceeded through an enclosed oven with no more physical heat applied. Eggs cooked themselves using residual heat from the pan.

After 55 seconds of cooking, eggs are flipped into thirds while remaining in the molds. Plastic flippers used for flipping the eggs are manufactured by Proto-Mold Co. Eggs were in a semi-liquid state at the time they were flipped. Methods and apparatus for folding eggs are described in U.S. Application No. 60/571,430 filed May 14, 2.004 which is incorporated herein by reference.

The eggs proceeded through a first transfer conveyor which releases the eggs from the molds and completes the cooking process. The eggs remained in contact with the first transfer conveyor for at least 10 seconds then placed directly on belt for freezer.

The eggs entered a freezer (Frigoscandia Co.) which was set at -50°F. The product was frozen using ammonia refrigeration with a dwell time of 6.1 minutes in freezer. An impingement freezer (Frigoscandia) may also be used to freeze the product.

Each individual egg patty entered a metal detection device before entering a final case. The metal detector was set to detect 2 mm stainless steel, 2 mm ferrrous and 2 mm non-ferrous.

Numerous modifications and variations in practice of the invention are expected to occur to those skilled in the art upon consideration of the foregoing detailed description of the invention. Consequently, such modifications and variations are intended to be included within the scope of the following claims.

## Claims

1. An egg blend comprising at least 90 weight percent liquid whole egg, an edible oil, an amount of freeze-thaw stabilizer effective for providing freeze-thaw stability to the blend after it is cooked, and an amount of pH controller effective for providing the blend with a pH of 7.2 or less.

2. The egg blend of claim 1 wherein the blend further includes a gum in an amount effective to suspend the freeze thaw stabilizer and the freeze-thaw stabilizer is a modified food starch selected from the group consisting of modified corn starch, modified potato starch, modified tapioca starch and mixtures thereof.

3. The egg blend of claim 2 wherein the modified food starch includes corn starch.

4. The egg blend of claim 3 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof, the oil, the modified food starch, and the gum in amounts effective for providing an egg patty made from the egg blend with foldability which is greater than an egg patty of the same size and thickness made from liquid whole egg.

5. The egg blend of claim 4 wherein the pH controller is selected from the group consisting of citric acid, tetrasodium pyrophosphate disodium phosphate, trisodiumphosphate, sodium pyrophosphate, monosodium phosphate and mixtures thereof.

6. The egg blend of claim 5 wherein the egg blend comprises from 95 to 98.5 weight percent liquid whole egg, and from 1 to 3 weight percent edible oil.

7. The egg blend of claim 4 wherein the egg blend further comprises from 0.01 to 0.25 weight percent of natural egg flavor ingredients.

8. The egg blend of claim 7 wherein the egg blend further comprises from about 0.15 to about 0.21 weight percent of a phosphate selected from the group consisting of tetrasodium pyrophosphate disodium phosphate, trisodiumphosphate, sodium acid pyrophosphate, monosodium phosphates and mixtures thereof.

9. A cooked foldable egg patty which is made from a blend comprising:
from 95 to 98.5 weight percent liquid whole egg;
from 1 to 3 weight percent edible oil;
from 0.01 to 0.25 weight percent flavor;
from 0.15 to 0.21 weight percent phosphates;
an amount of a modified food starch effective for providing freeze-thaw stability to the egg patty;
an amount of gum effective to suspend the modified food starch in the blend; and
an amount of a pH controller effective for providing the blend with a pH of 7.2 or less, the oil, the modified food starch, the gum in amounts effective for providing an egg patty made from the egg blend with foldability which is greater than an egg patty of the same size and thickness made from liquid whole egg.

10. The egg patty of claim 9 wherein the modified food starch includes modified corn starch.

11. The egg patty of claim 9 wherein the modified food starch is tapioca starch.

12. The egg patty of claim 9 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof.

13. The egg patty of claim 9 wherein the flavor is natural egg flavor ingredients.

14. The egg patty of claim 9 wherein the pH controller is selected from the group consisting of tetrasodium pyrophosphate disodium phosphate, trisodiumphosphate, citric acid, sodium pyrophosphate, monosodium phosphate and mixtures thereof.

15. A frozen egg patty comprising a cooked egg patty made from an egg blend comprising at least 90 weight percent liquid whole egg, an edible oil, an amount of freeze-thaw stabilizer effective for providing freeze-thaw stability, flavor, gum in an amount effective to suspend the freeze-thaw stabilizer, phosphates and an amount of pH controller effective for providing the blend a pH of 7.2 or less.

16. The frozen egg patty of claim 15 wherein the freeze-thaw stabilizer is a modified food starch selected from the group consisting of modified corn starch, modified potato starch, modified tapioca starch and mixtures thereof.

17. The frozen egg patty of claim 16 wherein the modified food starch includes modified com starch.

18. The frozen egg patty of claim 16 wherein the modified food starch includes modified tapioca starch.

19. The frozen egg patty of claim 16 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof.

20. The frozen egg patty of claim 16 wherein the pH controller is selected from the group consisting of tetrasodium pyrophosphate disodium phosphate, trisodiumphosphate, citric acid, sodium pyrophosphate, monosodium phosphate and mixtures thereof.

21. The frozen egg patty of claim 16 wherein the egg blend comprises from 95 to 98.5 weight percent liquid whole egg, and from 2 to 3 weight percent edible oil.

22. The frozen egg patty of claim 21 wherein the egg blend further comprises from 0.01 to 0.25 weight percent of natural egg flavor ingredients.

23. A method of making a cooked egg patty comprising:
blending liquid whole egg, an edible oil, an amount of freeze-thaw stabilizer effective for providing freeze-thaw stability, flavor, phosphates and an amount of pH controller effective for providing a pH of 7.2 or less, the liquid whole egg comprising at least 90 weight percent of the blend; and
cooking the blend for a time and temperature effective to coagulate the egg in the blend and to provide a cooked egg patty which includes cooked liquid whole egg.

24. The method of claim 23 wherein the freeze-thaw stabilizer is a modified food starch selected from the group consisting of modified corn starch, modified potato starch, modified tapioca starch and mixtures thereof.

25. The method of claim 24 wherein the blend further comprises a gum in an amount effective for suspending the modified food starch in the blend, the modified food starch and the gum in amounts effective for providing a cooked egg patty made from the egg blend with foldability which is greater than a cooked egg patty made from liquid whole egg.

26. The method of claim 25 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof.

27. The method of claim 26 wherein the pH controller is selected from the group consisting of tetrasodium pyrophosphate, disodium phosphate, trisodiumphosphate, citric acid, sodium pyrophosphate, monosodium phosphate and mixtures thereof.

28. The method of claim 26 wherein the egg blend comprises from 95 to 98.5 weight percent liquid whole egg, and from 1 to 3 weight percent edible oil.

29. The method of claim 26 wherein the egg blend further comprises from 0.01 to 0.25 weight percent of natural egg flavor ingredients.

30. A method of making a cooked egg patty comprising:
blending liquid whole egg, an edible oil, an amount of modified food starch effective for providing freeze-thaw stability, an egg flavor additive, phosphates and an amount of pH controller effective for providing a pH of 7.2 or less, and a gum, the liquid whole egg comprising at least 90 weight percent of the blend, the modified food starch selected from the group consisting of modified corn starch, modified potato starch, modified tapioca starch and mixtures thereof, the gum in an amount effective for suspending the modified food starch in the blend; and
cooking the blend on a surface which has a temperature of from 220°F to 310°F, the gum in an amount effective for providing a cooked egg patty made from the egg blend with foldability which is greater than a cooked egg patty of the same size and thickness made from liquid whole egg.

31. The method of claim 30 wherein the modified food starch includes corn starch.

32. The method of claim 31 wherein the modified food starch includes tapioca starch.

33. The method of claim 30 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof.

34. The method of claim 30 wherein the pH controller is selected from the group consisting of tetrasodium pyrophosphate, disodium phosphate, trisodiumphosphate, citric acid, sodium pyrophosphate, monosodium phosphate and mixtures thereof.

35. The method of claim 30 wherein the egg patty comprises from 95 to 98.5 weight percent liquid whole egg, and from 1 to 3 weight percent edible oil.

36. The method of claim 30 wherein the egg patty further comprises from 0.01 to 0.25 weight percent of natural egg flavor ingredients.

37. A method of making a cooked frozen egg patty comprising:
blending liquid whole egg, an edible oil, an amount of modified food starch effective for providing freeze-thaw stability, an egg flavor additive, phosphates and an amount of pH controller effective for providing a pH of 7.2 or less, and a gum, the liquid whole egg comprising at least 90 weight percent of the blend, the modified food starch selected from the group consisting of modified corn starch, modified potato starch, modified tapioca starch and mixtures thereof, the gum in an amount effective for suspending the modified food starch in the blend;
cooking the blend on a surface which has a temperature of from 220°F to 310°F , the gum in an amount effective for providing a cooked egg patty made from the egg blend with foldability which is greater than a cooked egg patty of the same size and thickness made from liquid whole egg; and
freezing the cooked liquid whole egg blend to a temperature of less than 0°F.

38. The method of claim 37 wherein the modified food starch includes corn starch.

39. The method of claim 37 wherein the modified food starch includes tapioca starch.

40. The method of claim 37 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof.

41. The method of claim 40 wherein the pH controller is selected from the group consisting of tetrasodium pyrophosphate, disodium phosphate, trisodiumphosphate, citric acid, sodium pyrophosphate, monosodium phosphate and mixtures thereof.

42. The method of claim 37 wherein the egg blend comprises from 95 to 98.5 weight percent liquid whole egg, and from 1 to 3 weight percent edible oil.

43. The method of claim 37 wherein the egg blend further comprises from 0.01 to 0.25 weight percent of natural egg flavor ingredients.

44. A cooked folded egg patty which is made from a blend comprising:
from 95 to 98.5 weight percent liquid whole egg;
from 1 to 3 weight percent edible oil;
from 0.01 to 0.25 weight percent flavor;
from 0.15 to 0.21 weight percent phosphates;
an amount of a modified food starch effective for providing freeze-thaw stability to the egg patty;
an amount of gum effective to suspend the modified food starch in the blend; and
an amount of a pH controller effective for providing the blend with a pH of 7.2 or less, the oil, the modified food starch.

45. The folded egg patty of claim 44 wherein the modified food starch includes modified corn starch.

46. The folded egg patty of claim 44 wherein the modified food starch is tapioca starch.

47. The egg patty of claim 44 wherein the edible oil is selected from the group consisting of soybean oil, partially hydrogenated soybean oil, corn oil, canola oil, olive oil, sunflower oil, peanut oil, coconut oil, rapeseed oil, palm oil, palm kernel oil, cottonseed oil, and mixtures thereof.

48. The egg patty of claim 44 wherein the flavor is natural egg flavor ingredients.

49. The egg patty of claim 44 wherein the pH controller is selected from the group consisting of tetrasodium pyrophosphate, disodium phosphate, trisodoumphosphate, citric acid, sodium pyrophosphate, monosodium phosphate and mixtures thereof.

50. An egg blend comprising:
at least 90 weight percent liquid whole egg;
an edible oil;
a modified food starch;
a gum, the oil, the modified food starch, and the gum in amounts effective for providing an egg patty made from the egg blend with foldability which is greater than an egg patty of the same size and thickness made from liquid whole egg;
an amount of freeze-thaw stabilizer effective for providing freeze-thaw stability to the blend after it is cooked; and
an amount of pH controller effective for providing the blend with a pH of 7.2 or less.

51. The egg blend of claim 50 wherein the modified food starch is selected from the group consisting of modified corn starch, modified potato starch, modified tapioca starch and mixtures thereof.

52. The egg blend of claim 51 wherein, the blend comprises:
from 1 to 3 weight percent edible oil;
from 0.01 to 0.25 weight percent flavor;
from 0.15 to 0.21 weight percent phosphates; and
the gum and the modified starch comprise from 0.5 to 3 weight percent.
